**Europäisches Patentamt**

**European Patent Office**

**Office européen des brevets**

(19)

(11) Veröffentlichungsnummer: **0 049 868**
B2

(12) **NEUE EUROPÄISCHE PATENTSCHRIFT**

(45) Veröffentlichungstag der neuen Patentschrift:
**22.06.88**

(51) Int. Cl.⁴: **C 09 D 3/58,** C 09 D 3/66

(21) Anmeldenummer: **81108063.9**

(22) Anmeldetag: **08.10.81**

(54) Verfahren zur Herstellung wärmehärtbarer, mit Wasser verdünnbarer Lacke und deren Verwendung für Beschichtungen.

(30) Priorität: **10.10.80 DE 3038243**

(43) Veröffentlichungstag der Anmeldung:
**21.04.82 Patentblatt 82/16**

(45) Bekanntmachung des Hinweises auf die Patenterteilung:
**24.10.84 Patentblatt 84/43**

(45) Bekanntmachung des Hinweises auf die Entscheidung
über den Einspruch:
**22.06.88 Patentblatt 88/25**

(84) Benannte Vertragsstaaten:
**AT BE CH DE FR GB IT LI NL SE**

(56) Entgegenhaltungen:
**DE - A - 2 606 284
DE - A - 2 613 099
FR - A - 1 230 708
FR - A - 1 270 355
FR - A - 2 344 611
US - A - 3 493 414**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT,
Postfach 80 03 20, D-6230 Frankfurt am Main 80 (DE)**

(72) Erfinder: **Johannes, Gerhard, Breslauer Strasse 6,
D-6204 Taunusstein (DE)**
Erfinder: **Dürr, Helmut, Dr., Hansaallee 111,
D-6000 Frankfurt am Main (DE)**
Erfinder: **Plath, Dieter, Dr., Hildastrasse 32,
D-6200 Wiesbaden (DE)**
Erfinder: **Schneider, Diedrich, Am Rosenhang 10,
D-6200 Wiesbaden (DE)**
Erfinder: **Esser, Klaus, Habichtsthalerweg 8,
D-8752 Heinrichsthal (DE)**

EP 0 049 868 B2

## Beschreibung

Die Erfindung betrifft ein Verfahren zur Herstellung von wärmehärtbaren mit Wasser verdünnbaren Lacken und deren Verwendung für Beschichtungen, insbesondere von metallischen Substraten, durch Einsatz stromloser Auftragsmethoden – wie Spritzen, Tauchen, Fluten, Walzen – und das elektrostatische Sprühverfahren.

In der Industrie wird bei der Lackierung vielfach nach dem Arbeitsablauf Auftrag-Vernetzung-Schleifen-Überlackierung vorgegangen, und zwar insbesondere bei der Fahrzeuglackierung, vor allem der Lackierung von Personenkraftwagen.

Aus der DE-OS 2 248 836 ist bekannt, Lacke für das elektrolytische Abscheidungsverfahren durch folgende Massnahmen herzustellen, die eng mit der Pulverlackherstellung verbunden sind:

1. Vermischen der Komponenten des Pulverlacks;
2. Extrusion des Gemisches;
3. Kühlung des Extrudates;
4. Mahlung des Extrudates zu einem Pulverlack mit maximalen Korngrössen von 100 μm;
5. Eintragen des gemahlenen Pulverlacks in ein kationisches Bindemittel;
6. Homogenisieren;
7. Einstellung des Lackes mit Wasser auf den gewünschten Feststoffgehalt für den elektrolytischen Auftrag.

Die so hergestellten Lacke bestehen aus einem als Bindemittel dienenden kationischen Harz sowie einem pulverförmigen nicht-ionogenen Harz, das übliche Zusatzstoffe wie Pigmente enthält und die in getrennten Operationen hergestellt und zu dem Anstrichmittel verarbeitet werden. Mit diesen Lacken lassen sich Schichten mit einer Dicke von mehr als 30 μm erhalten. ·

Aus Modern Paint Coating, 1979, 69, (6), 53–55 (Ciba-Geigy, Schweiz) ist weiter bekannt, Überzugsmassen für stromlose Applikationsverfahren oder für das elektrostatische Beschichtungsverfahren – in ähnlicher Weise wie in der DE-OS 2 248 836 beschrieben – zu erzeugen, nämlich durch die oben genannten Massnahmen 1 bis 4 und 7 und folgende weitere Massnahmen:
5a. Aufschlämmung des Pulverlacks in Wasser;
6a. Feinmahlung des Gemisches Pulverlack-Wasser in einer Perlmühle.

Bei dem bekannten Verfahren wird stets erst ein Pulverlack erzeugt, der bei der Herstellung im Extruder im allgemeinen Temperaturen von 100 bis 130°C durchläuft, und zwar für eine Dauer, die von den Extrusionsparametern Temperatur und Friktion abhängig ist. Bei dieser Temperatur tritt im allgemeinen eine Vorreaktion ein, die eine Erhöhung der Schmelzviskosität und damit schlechtes Verlaufen und ungenügende Substratbenetzung verursacht und sich so bei der späteren Verarbeitung auf die Filmbildung aus den Lacken nachteilig auswirkt. Ausserdem ist eine Einbusse an mechanischen Festigkeiten der Lackschichten bei der schlagartigen Verformung bzw. bei der Dehnbarkeit zu beobachten. Auch die Beständigkeit gegen korrosive Einflüsse wird beeinträchtigt. Die Nachteile bei der Filmbildung wirken sich auch unvorteilhaft bei der weiteren Bearbeitung der nach dem elektrolytischen Auftrag und der chemischen Vernetzung erhaltenen Überzüge aus, z.B. wenn man die Welligkeit der Oberfläche durch Schleifen reduzieren will. Die Schleifarbeit ist naturgemäss um so grösser, je welliger die Oberfläche ist, d.h. je schlechter der Lack verlaufen ist. Das Schleifen ist jedoch erforderlich, um den nachfolgend aufgetragenen Lackschichten mit dekorativer Funktion ein möglichst einwandfreies optisches Aussehen zu verleihen.

Mit den aus der DE-OS 2 248 836 bekannten Lacken werden jedoch Überzugsfilme erhalten, die wegen der bereits beschriebenen Nachteile für eine breite Anwendung in der Praxis nicht in Betracht kommen, obwohl die Nachfrage erheblich ist.

Aus der europäischen Patentanmeldung 15 035 sind weiterhin Überzugsmischungen auf der Grundlage eines wasserverdünnbaren maleinisierten Öls bekannt, die dadurch gekennzeichnet sind, dass sie ein Bindemittel enthalten, das aus 30–95 Gew.% des wasserverdünnbaren maleinisierten Öls und 5–70 Gew.% einer festen, zerkleinerten epoxydgruppenhaltigen Verbindung mit einer Teilchengrösse von 0,5–35 μm, um einem durchschnittlichen Molekulargewicht von mindestens 1000 und einem Epoxydäquivalentgewicht von 450–7500 aufgebaut ist, wobei die Angaben der Gewichtsprozente auf die Summe der beiden lösungsmittelfreien Komponenten bezogen ist. Bei der Herstellung des maleinisierten Öls wird ein 2,5- bis mehr als 5facher Überschuss an Maleinsäureanhydrid gegenüber dem eingesetzten ungesättigten Fettsäureester angewandt, so dass eine grosse Anzahl von funktionellen Hydroxylgruppen für weitere Umsetzungen zur Verfügung steht.

Demgegenüber sieht die Erfindung die Herstellung von Lacken vor, die gegenüber der DE-OS 2 248 836 und der Zeitschrift Modern Paint Coating erheblich vereinfacht ist, die die im Zusammenhang mit diesen Literaturstellen genannten Nachteile nicht aufweisen und zudem verbesserte Eigenschaften haben. Die Vorteile des erfindungsgemässen Verfahrens gegenüber den beiden erstgenannten Literaturstellen bestehen darin, dass nach dem erfindungsgemässen Verfahren keine Reaktion der Komponenten während der Verarbeitung eintreten kann, weil im Gegensatz zu dem genannten Stand der Technik bei so niedrigen Temperaturen gearbeitet wird, dass ein Aufschmelzen der Reaktionskomponenten und damit eine Vorreaktion, die bekanntlich in der Flüssigphase wesentlich schneller in Gang kommt als im festen Zustand, vermieden wird. Ein weiterer Vorteil besteht in einem wesentlich geringeren Aufwand für die Reinigung der verwendeten Apparaturen, da das Reaktionsprodukt oder Teile davon unter den verwendeten Temperaturen an den Wandungen der Verarbeitungsgefässe nicht ansetzen bzw. anbacken.

Weiter ist von Vorteil, dass technologisch und ökonomisch aufwendige Verfahrensschritte eliminiert werden können. Schliesslich unterscheiden sich die durch das erfindungsgemässe Verfahren erhaltenen Lacke vom Stand der Technik auch dadurch, dass während der Fertigung Korrekturen an der Lackrezeptur durchgeführt werden können, und zwar ohne Wiederholung aufwendiger Verfahrensschritte.

Gegenstand der Erfindung ist ein Verfahren zur Herstellung wärmehärtbarer, mit Wasser verdünnbarer Lacke auf der Grundlage von

A) 1–90 Gew.% mindestens eines bei Raumtemperatur festen, von Aminogruppen freien Epoxydharzes,

B) 10–90 Gew.% mindestens eines Kunstharzes mit funktionellen Gruppen, das in Lösung oder Dispersion mit einem Festkörpergehalt von 10–90 Gew.% vorliegt,

C) 0,05–40 Gew.% mindestens einer bei Raumtemperatur festen und/oder flüssigen organischen Verbindung aus der Gruppe Imidazol und 2-Imidazolin, deren Derivate und Addukte mit Epoxydverbindungen, Dicyandiamid, substituierte Biguanide und Aminharze und

D) 0–75 Gew.% Pigmenten und/oder üblichen Hilfsstoffen,

wobei die Komponenten A) bis D), deren Summe stets 100 Gew.% beträgt und deren Mengen auf lösungsmittel- oder wasserfreie Substanzen bezogen sind, in wenigstens einer Stufe gemeinsam unter Verkleinerung der ursprünglichen Partikelgrösse zu einem homogenen Lack verarbeitet werden, der eine Teilchengrösse von weniger als 100 µm aufweist und wobei anschliessend, falls erforderlich, mit Wasser auf den für den Auftrag erforderlichen Feststoffgehalt eingestellt wird, dadurch gekennzeichnet, dass die Komponente B) eine wässrige Dispersion oder Lösung von gesättigten säurefunktionellen, aus C, H und O bestehenden, wenigstens teilweise mit Aminen neutralisierten Polyesterharzen oder von deren Modifikationsprodukten mit Ölen ist, wobei die Polyesterharze vor der Neutralisation eine Säurezahl von mindestens 30 und im allgemeinen nicht über 120 und eine OH-Zahl von 100 bis 150 haben und die Summe von Säurezahl und Hydroxylzahl wenigstens so gross ist, dass das wenigstens teilweise neutralisierte Polyesterharz eine stabile wässrige Dispersion oder Lösung bildet. Wenn in mehreren Stufen gearbeitet wird, sollen die Komponenten in wenigstens einer Stufe gemeinsam verarbeitet werden.

Das erfindungsgemässe Verfahren kann diskontinuierlich oder, was bevorzugt ist, kontinuierlich durchgeführt werden. Dabei werden die festen Ausgangsstoffe zusammen mit den anderen Komponenten in geeigneten Aggregaten vermahlen. Vorteilhaft wird mindestens eine Stufe im Nassverfahren, also in Gegenwart von Wasser, durchgeführt. Die Konzentration des Mahlgutes ist dabei von der Viskosität des Gutes abhängig, seine Pumpfähigkeit muss erhalten bleiben. Im allgemeinen besitzen derartige Mahlteige Festkörpergehalte bis zu 80, vorzugsweise bis zu 50 Gew.%. Anschliessend wird die erhaltene Lackmischung mit Wasser zu einer Dispersion auf den gewünschten Feststoffgehalt von im allgemeinen 5–80, vorzugsweise 5–40 Gew.% eingestellt, sofern sie diesen noch nicht besitzt. Zweckmässig erfolgt die Vermahlung bei Temperaturen von 0 bis 70°C unter Vermeidung von Überhitzungen.

Die Teilchengrösse der festen Bestandteile des Lackes soll nach beendeter Mahlung höchstens 15, insbesondere 5 µm betragen.

Als Aggregate für die Verkleinerung der Partikelgrösse sind beispielsweise Schwing-, Prallteller-, Stift-, Hammer-, Luftstrahl-, Planetkugel- und Sichtermühlen sowie Rührwerkskugelmühlen wie Sand- und Perlmühlen, Kolloidmühlen und Extruder geeignet, die einzeln oder in Kaskadenform arbeiten können, wobei auch die Möglichkeit von Kombinationen der verschiedenen Mühlentypen besteht. Im Nassverfahren wird als flüssige Phase vorzugsweise Wasser eingesetzt.

Das Epoxydharz A) ist bei Raumtemperatur fest, schmilzt und verläuft bei der Vernetzungstemperatur, ist somit schichtbildend und verleiht der Lackierung Korrosionsfestigkeit sowie Schlagfestigkeit. Vorzugsweise eignen sich Epoxydharze, die auf der Basis von Diphenylolpropan (Bisphenol A) und/oder Diphenylolmethan (Bisphenol F) und Epihalogenhydrin und/oder Methylepihalogenhydrin, vorzugsweise Epichlorhydrin nach dem in der Literatur [siehe z.B. «Epoxydverbindungen und Epoxydharze», Paquin (1958), S. 322 ff.] beschriebenen Ein- oder Zweistufenverfahren hergestellt werden können, z.B. solche mit einem Erweichungspunkt (EP) nach Durrans von mindestens 70°C und einem Epoxydäquivalentgewicht (EÄ) von mindestens 490; z.B. sind Produkte mit EP 93–104°C und EÄ 875–1000 und EP 118°C und EÄ 1865 geeignet. Die Komponente A) wird vorzugsweise in Mengen von 5–50 und insbesondere 10–40 Gew.% eingesetzt. Diese und die weiterhin genannten Mengenverhältnisse beziehen sich stets auf 100 Gew.% der Komponenten A)–D).

Das gesättigte Polyesterharz der Komponente B), das vorzugsweise eine Säurezahl von 45 bis 80 hat, ist mindestens ein intermolekular vernetzendes, wärmehärtbares, funktionelle Gruppen enthaltendes Harz, das – zusammen mit etwa vorhandenem Aminharz der Komponente C) – Bindemittel für alle im Lack enthaltenen Komponenten darstellt und als wässrige Lösung oder Dispersion vorzugsweise in Mengen von 10–70 und insbesondere von 15–50 Gew.% (Festkörper) eingesetzt wird. Es liegt – im allgemeinen bei Raumtemperatur – in wässriger Lösung oder Dispersion vor, die vorzugsweise einen Feststoffgehalt von 20–70 Gew.% haben und als Lösungsmittel Wasser und gegebenenfalls mindestens ein wasserlösliches organisches Lösungsmittel enthalten wie wasserlösliche Alkohole, z.B. Methanol, Äthanol, n- und iso-Propanol, Glykolmonoäther und Ketone.

Polyesterharze, die als Komponente B) geeignet sind, lassen sich nach üblichen Verfahren aus Polycarbonsäuren und mehrwertigen, zum Teil mindestens dreiwertigen Alkoholen herstellen. Geeignete Carbonsäuren sind aliphatischer, cycloaliphatischer und/oder aromatischer Natur, vorzugsweise Di-, Tri- und gegebenenfalls Tetracarbonsäuren mit z.B. 4 bis 12 C-Atomen pro Molekül bzw. deren Anhydride, soweit sie existieren, oder Ester. Im einzelnen seien z.B. genannt ortho-, iso- und Terephthalsäure, Hexahydrophthalsäure, Trimellith-, Pyromellith-, Bernstein-, Adipin- und Sebazinsäure bzw. deren Anhydride, soweit sie existieren.

Geeignete alkoholische Komponenten sind mehrwertige Alkohole, und zwar zweiwertige Alkohole wie Äthan-, 1,2- bzw. 1,3-Propandiol, die verschiedenen Butan-, Pentan- und Hexandiol wie Butandiol-1,4, Neopentylglycol und Hexandiol-1,6- Di- und Triäthylenglykol, oxäthylierte und perhydrierte Bisphenole, Trimethyloläthan und -propan, Glycerin und Pentaerythrit.

Gegebenenfalls können sowohl der Säurekomponente als auch der Alkoholkomponente kettenabbrechende einwertige Verbindungen, nämlich Monocarbonsäuren wie Benzoesäure oder einwertige Alkohole wie die verschiedenen Propanole, Butanole, Cyclohexanol und Benzylalkohol zugefügt werden.

Als Modifikationsprodukte mit Ölen kommen z.B. solche in Frage, die mit Fettsäureestern wie Leinöl, Sojaöl, Saffloröl, Rizinusöl, Baumwollsaatöl, Erdnussöl bzw. den zugrundeliegenden Fettsäuren wie Lein-, Soja- und Safflorölfettsäure erhalten worden sind. Auch eine Modifizierung durch Produkte, die durch Dimerisierung aus natürlichen ungesättigten Ölen oder Fettsäuren gewonnen sind, ist möglich, ferner vor allem gesättigte Fettsäuren wie Kokosfettsäure.

Zur Neutralisation des Polyesterharzes eignen sich die Amine, die bei der Herstellung von wasserlöslichen Systemen gewöhnlich verwendet werden, z.B. Triäthylamin.

Als Vernetzungskomponente C) eignen sich z.B. Imidazol und 2-Imidazolin sowie deren Derivate und Addukte mit Epoxydverbindungen, z.B. den oben genannten, Dicyanidamid, substituierte Biguanide und Aminharze wie Melamin- und Harnstoffharze. Diese Verbindungen C) werden allein oder als Mischung in Mengen von 0,05–40, vorzugsweise 0,1–30 Gew.% dem Ansatz zugefügt. Sofern die Komponente C) aus Harzen besteht, beträgt deren Anteil im allgemeinen 8–40, vorzugsweise 15–30 Gew.%, während dann, wenn die Komponente C) aus anderen Stoffen besteht, deren Anteil 0,05–8 Gew.% beträgt. In Kombinationen verschiedener Komponenten C) ist natürlich ein kleinerer Harzanteil als 8 Gew.% möglich.

Bei dem erfindungsgemässen Verfahren können dem Lack als Komponente D) Pigmente und übliche Hilfsstoffe zugesetzt werden.

Die Pigmentierung wird unter Verwendung anorganischer und/oder organischer Pigmente, beispielsweise Titandioxyd und Russ durchgeführt, wobei der Anteil 70, vorzugsweise 50 Gew.% nicht übersteigen soll. Russ ist dabei in Mengen von nicht mehr als 10, vorzugsweise nicht mehr als 5 Gew.% enthalten.

Übliche Hilfsstoffe sind z.B. Verlaufmittel und Netzmittel wie Silikonöle und -harze, Polyacrylate wie Poly-n-butylacrylat und Poly-2-äthyl-hexylacrylat, Celluloseacetobutyrat und das Umsetzungsprodukt aus 2 Mol Methyl-Isobutyl-Keton und Acetylen. Diese Hilfsstoffe werden im allgemeinen in Mengen bis zu 5, vorzugsweise bis zu 1 Gew.% eingesetzt. Ein weiterer Hilfsstoff ist feinteilige Kieselsäure, d.h. solche mit grosser Oberfläche, die in Mengen bis zu 10, vorzugsweise von 0,5–5 Gew.% als Thixotropiermittel bzw. als Mittel gegen Sedimentation zugegeben werden kann.

Die mit Hilfe des erfindungsgemässen Verfahrens erhaltenen Lacke eignen sich hervorragend für die stromlose bzw. elektrostatische Beschichtung von metallischen Substraten.

Als Auftragsmethoden für die erfindungsgemäss erhaltenen Lacke eignen sich ausser dem elektrostatischen Auftragsverfahren z.B.
a) das Spritzverfahren, welches mit oder ohne Anwendung von Druckluft (sog. Airless-Methode) bei Raum- oder erhöhter Temperatur (z.B. Heiss-Spritzverfahren) oder elektrostatisch durchgeführt wird,
b) das Tauchverfahren ohne Anwendung von Strom,
c) das Flutverfahren und
d) das Walzverfahren (z.B. Coil Coating).

Die genannten Auftragsmethoden sind Stand der Technik und dem Fachmann bekannt. Bei der Vielfalt der Variablen ist es nicht erforderlich, Einzelheiten aufzuzeigen. Der Auftrag kann z.B. auf entfettetes bzw. chemisch vorbehandeltes, nicht grundiertes bzw. grundiertes metallisches Substrat erfolgen, ferner z.B. auf Glas und Keramik.

Die bei der Anwendung der genannten Auftragsverfahren erhaltenen Überzüge werden im allgemeinen nach einer Ablüftzeit von 0 bis 30 Minuten bei Temperaturen zwischen 80°C und 300°C (die entsprechenden Zeiten betragen 60 min bzw. wenige Sekunden) in chemisch vernetzte Lackierungen übergeführt, die sich z.B. durch gute Haftung auf dem Substrat, insbesondere Metallen, Härte, Elastizität, Schlagzähigkeit, Korrosionsfestigkeit und Lösungsmittelbeständigkeit auszeichnen. Die Schichtdicken variieren im allgemeinen zwischen 3 und 200 μm.

Die nach dem vorliegenden Verfahren hergestellten Überzugsmassen werden als Grundierungen, Füller oder Decklacke, bzw. Einschichtlacke für die Beschichtung angewandt. Die bevorzugte Anwendung ist die eines Füllers, vor allem in der Automobilindustrie. Unter einem Füller wird die zwischen Grundierung und Decklack befindliche Schicht verstanden.

Im folgenden Beispiel bedeutet T Gewichtsteile.

Beispiel
51 T Titandioxyd, 0,6 T Russ, 4,8 T Talkum, 0,6 T Eisenoxydgelb, 30 T Hexamethoxymethylmela-

minharz mit einer dynamischen Viskosität von 6000 mPa·s bei 20°C, einer Säurezahl unter 1 (DIN 53183), einem pH-Wert von 7,7 (50%ig in Wasser) und einem Einbrennrückstand von 95% (DIN 53182), 1,5 T eines Umsetzungsproduktes aus 2 Mol Methyl-Isobutyl-Keton und 1 Mol Acetylen, 30 T deionisiertes Wasser und 30 T einer 50%igen wässrigen Dispersion (Viskosität etwa 2000 mPa·s bei 20°C) aus einem handelsüblichen Alkydharz auf der Grundlage von Phthalsäure bzw. deren Anhydrid, einer gesättigten aliphatischen Dicarbonsäure, einem dreiwertigen Alkohol mit bis zu 6 C-Atomen und einer Fettsäure mittlerer Kettenlänge, teilweise neutralisiert mit einem tertiären Amin bis zum pH-Wert von etwa 8, werden in einer Sandmühle (Gewichtsverhältnis Ottawa-Sand:Mahlgut = 1:1) unter Wasserkühlung 30 min bei 5000 Upm gemahlen.

Die Fertigstellung des Lackes erfolgt durch Zugabe von 78 T der vorgenannten Alkydharzdispersion und 36 T Epoxydharz auf der Basis von Diphenylolpropan und Epichlorhydrin mit einem Erweichungspunkt von 93–104°C nach Durrans und einem Epoxydäquivalentgewicht von 875–1000 in mikronisierter Form, d.h. mit einer maximalen Teilchengrösse von 15 µm (die hauptsächlich vorkommende Teilchengrösse beträgt 4 µm) und 0,6 T Imidazol (in Form von 1,2 T einer 50%igen Lösung in Wasser). Abschliessend wird der Lack weitere 5 Minuten bei 5000 Upm und unter Anwendung von Wasserkühlung gemahlen.

Nach Abtrennung des Ottawa-Sandes in einem Sieb (240 µm Maschenweite) wird ein Lack mit einer Viskosität von 20 Sekunden nach DIN 53211 erhalten.

Vergleich

49 T einer 40%igen wässrigen Lösung eines Maleinatöls, hergestellt aus 25 T Maleinsäureanhydrid und 75 T Sojaöl, werden mit 11 T des im Beispiel verwendeten Epoxydharzes gemischt. Dann werden 41 T Titandioxyd hinzugefügt und diese Mischung anschliessend auf eine Korngrösse von 25 µm gemahlen. Dann werden noch 6 T Wasser hinzugefügt. Das Gemisch hat einen Festkörpergehalt von 71,5% und eine Viskosität nach DIN 53 211 von 18 Sekunden.

Beide Lacke werden im Spritzverfahren ohne Anwendung von Druckluft in bekannter Weise auf ein ebenes zinkphosphatiertes Stahlblech (Dicke 0,7 mm) in einer Schichtdicke von 50 µm aufgetragen. Nach einer Ablüftung von 10 Minuten bei Raumtemperatur (22°C) wird die Lackierung in 30 Minuten, und zwar nach der Erfindung bei 160°C und nach dem Vergleich bei 170°C im Umluft-Trockenschrank chemisch vernetzt. Die erhaltenen Lackierungen haben folgende Eigenschaften:

| Prüfung | Erfindung | Vergleich |
|---|---|---|
| Haftung (DIN 53151) | GT O | GT O |
| Schlagzähigkeit (ASTM D 2794-69/reverse) | 120 i.p. | 28 i.p. |

| Prüfung | Erfindung | Vergleich |
|---|---|---|
| Xylol-Festigkeit | 40 Min./ 22°C | 10 Min./ 22°C |
| Elastizität (Erichsen-Tiefung) (DIN 53156) | 10 mm | 2,5 mm |

## Patentansprüche

1. Verfahren zur Herstellung wärmehärtbarer, mit Wasser verdünnbarer Lacke auf der Grundlage von
A) 1–90 Gew.% mindestens eines bei Raumtemperatur festen, von Aminogruppen freien Epoxydharzes,
B) 10–90 Gew.% mindestens eines Kunstharzes mit funktionellen Gruppen, das in Lösung oder Dispersion mit einem Festkörpergehalt von 10–90 Gew.% vorliegt,
C) 0,05–40 Gew.% mindestens einer bei Raumtemperatur festen und/oder flüssigen organischen Verbindung aus der Gruppe Imidazol und 2-Imidazolin, deren Derivate und Addukte mit Epoxydverbindungen, Dicyandiamid, substituierte Biguanide und Aminharze und
D) 0–75 Gew.% Pigmenten und/oder üblichen Hilfsstoffen,
wobei die Komponenten A) bis D), deren Summe stets 100 Gew.% beträgt und deren Mengen auf lösungsmittel- oder wasserfreie Substanzen bezogen sind, in wenigstens einer Stufe gemeinsam unter Verkleinerung der ursprünglichen Partikelgrösse zu einem homogenen Lack verarbeitet werden, der eine Teilchengrösse von weniger als 100 µm aufweist und wobei anschliessend, falls erforderlich, mit Wasser auf den für den Auftrag erforderlichen Feststoffgehalt eingestellt wird, dadurch gekennzeichnet, dass die Komponente B) eine wässrige Dispersion oder Lösung von gesättigten säurefunktionellen, aus C, H und O bestehenden, wenigstens teilweise mit Aminen neutralisierten Polyesterharzen oder von deren Modifikationsprodukten mit Ölen ist, wobei die Polyesterharze vor der Neutralisation eine Säurezahl von mindestens 30 und im allgemeinen nicht über 120 und eine OH-Zahl von 100 bis 150 haben und die Summe von Säurezahl und Hydroxylzahl wenigstens so gross ist, dass das wenigstens teilweise neutralisierte Polyesterharz eine stabile wässrige Dispersion oder Lösung bildet.

2. Verfahren nach Anspruch 1, dadurch gekennzeichnet, dass 5–50, vorzugsweise 10–40 Gew.% der Komponente A), 10–70, vorzugsweise 15–50 Gew.% der Komponente B), 0,1–30 Gew.% der Komponente C) und als Komponente D) 0–70 Gew.% Pigmente und 0–5 Gew.% andere übliche Hilfsstoffe eingesetzt werden.

3. Verfahren nach Anspruch 1 oder 2, dadurch gekennzeichnet, dass die Komponente C) aus Harzen besteht und deren Anteil 8–40, vorzugsweise 15–30 Gew.% beträgt oder aus anderen Stoffen besteht und deren Anteil 0,05–8 Gew.% beträgt.

4. Verfahren nach einem oder mehreren der Ansprüche 1 bis 3, dadurch gekennzeichnet, dass die Komponente D) feinteilige Kieselsäure in Mengen bis zu 10, vorzugsweise von 0,5–5 Gew.% enthält.

5. Verfahren nach einem oder mehreren der Ansprüche 1 bis 4, dadurch gekennzeichnet, dass die Komponente D) als Pigment Russ in Mengen von nicht mehr als 10, vorzugsweise nicht mehr als 5 Gew.% enthält.

6. Verfahren nach einem oder mehreren der Ansprüche 1 bis 5, dadurch gekennzeichnet, dass eine Teilchengrösse von höchstens 15, insbesondere 5 μm erzeugt wird.

7. Verfahren nach einem oder mehreren der Ansprüche 1 bis 6, dadurch gekennzeichnet, dass das Verfahren kontinuierlich durchgeführt wird.

8. Verfahren nach einem oder mehreren der Ansprüche 1 bis 7, dadurch gekennzeichnet, dass das Verfahren in wenigstens einer Stufe in Gegenwart von Wasser durchgeführt wird.

9. Verfahren nach einem oder mehreren der Ansprüche 1 bis 8, dadurch gekennzeichnet, dass der Lack mit Wasser auf einen Festkörpergehalt von 5 bis 80, insbesondere 5–40 Gew.% eingestellt wird.

10. Verwendung der nach dem Verfahren gemäss einem oder mehreren der Ansprüche 1 bis 9 erhaltenen Lacke als Überzugsmittel für die Beschichtung, insbesondere von metallischen Substraten, durch Anwendung stromloser Auftrags-Verfahren bzw. des elektrostatischen Sprühverfahrens.

## Claims

1. Process for preparing heat-curable, water-dilutable coating compositions based on
A) 1–90 weight-% of at least one epoxy resin free from amino groups and solid at ambient temperature,
B) 10–90 weight-% of at least one synthetic resin having functional groups, which is in the form of a solution or dispersion having a solids content of 10–90 weight-%,
C) 0.05–40 weight-% of at least one organic compound which is liquid and/or solid at ambient temperature selected from the group of imidazole and 2-imidazoline, their derivatives and adducts with epoxy compounds, dicyan-diamide, substituted biguanides and amino resins and
D) 0–75 weight-% of pigments and/or conventional adjuvants,
whilst components A) to D), which always total 100 weight-% and the quantities of which are referred to solvent-free or anhydrous substances, are processed together in at least one stage with comminution of the original particle size to yield a homogeneous coating composition which has a particle size of less than 100 μm and subsequently, if desired, is adjusted with water to the solids content required for application, characterized in that component B) is an aqueous dispersion or solution of saturated acid-functional polyester resins consisting of C, H and O, at least partially neutralized with amines, or of the modification products thereof with oils, the polyester resins having before neutralization an acid number of at least 30 and generally not more than 120 and an OH-number of 100 to 150, the sum of acid number and hydroxyl number being at least so high that the at least partially neutralized polyester resin forms a stable aqueous dispersion or solution.

2. Process as claimed in claim 1, characterized in that 5–50, preferably 10–40 weight-% of component A), 10–70, preferably 15–50 weight-% of component B), 0.1–30 weight-% of component C) and, as component D) 0–70 weight-% of pigments and 0–5 weight-% of other conventional adjuvants are used.

3. Process as claimed in claim 1 or 2, characterized in that component C) consists of resins and the proportion thereof is 8–40, preferably 15–30 weight-%, or it consists of other substances and the proportion thereof is 0.05–8 weight-%.

4. Process as claimed in one or more of claims 1 to 3, characterized in that component D) contains finely divided silicic acid in amounts up to 10, preferably from 0.5 to 5 weight-%.

5. Process as claimed in one or more of claims 1 to 4, characterized in that component D) contains, as a pigment, carbon black in amounts of not more than 10, preferably not more than 5 weight-%.

6. Process as claimed in one or more of claims 1 to 5, characterized in that a particle size of not more than 15, more particularly not more than 5 μm is produced.

7. Process as claimed in one or more of claims 1 to 6, characterized in that the process is carried out continuously.

8. Process as claimed in one or more of claims 1 to 7, characterized in that the process is carried out in at least one stage in the presence of water.

9. Process as claimed in one or more of claims 1 to 8, characterized in that the coating composition is adjusted with water to have a solids content of 5 to 80, more particularly 5 to 40 weight-%.

10. Use of the coating compositions obtained by the method as claimed in one or more of claims 1 to 9, as coating agents, particularly for coating metal substrates, by the use of current-free methods of application or electrostatic spraying.

## Revendications

1. Procédé de préparation de peintures et vernis diluables à l'eau, thermodurcissables, à base de:

A) 1 à 90% en poids d'au moins une résine époxyde sans groupe amino, solide à la température ambiante,
B) 10 à 90% en poids d'au moins une résine synthétique comportant des groupes fonctionnels, qui est présente en solution ou dispersion avec une teneur en solides (ou extrait sec) de 10 à 90% en poids,

C) 0,05 à 40% en poids d'au moins un composé organique solide et/ou liquide à la température ambiante, choisi dans l'ensemble formé par l'imidazole et l'imidazoline-2, leurs dérivés et composés d'addition avec des époxydes, le dicyanodiamide, des biguanides substitués et des résines d'amines, et

D) 0 à 75% en poids de pigments et/ou d'adjuvants usuels, selon lequel on travaille ensemble les constituants A) à D) (dont la somme représente toujours 100% en poids et dont les quantités sont rapportées à des substances sans solvant ou sans eau) en au moins une étape pour réduire la grosseur initiale des particules et obtenir une peinture ou un vernis homogène présentant une grosseur de particules inférieure à 100 µm et selon lequel on ajuste s'il y a lieu, par addition d'eau, à une teneur en solides (ou extrait sec) nécessaire pour l'application, procédé caractérisé en ce que le constituant B) est formé d'une dispersion ou solution aqueuse de résines de polyester à groupes fonctionnels acides saturés, consistant en C, H et O, au moins partiellement neutralisées par des amines, ou consistant en leurs produits de modification par des huiles, les résines de polyester présentant avant la neutralisation un indice d'acide d'au moins 30 et n'excédant en général pas 120 et un indice de OH de 100 à 150, et la somme de l'indice d'acide et de l'indice d'hydroxyle ayant au moins une valeur telle que la résine de polyester au moins partiellement neutralisée forme une dispersion ou solution aqueuse stable.

2. Procédé selon la revendication 1, caractérisé en ce qu'on utilise 5 à 50, de préférence 10 à 40, % en poids du constituant A), 10 à 70, de préférence 15 à 50, % en poids du constituant B), 0,1 à 30% en poids du constituant C) et, comme constituant D), 0 à 70% en poids de pigments et 0 à 5% en poids d'autres adjuvants usuels.

3. Procédé selon la revendication 1 ou 2, caractérisé en ce que le constituant C) consiste en des résines dont la proportion est de 8 à 40, de préférence 15 à 30% en poids ou en d'autres substances dont la proportion est de 0,05 à 8% en poids.

4. Procédé selon une ou plusieurs des revendications 1 à 3, caractérisé en ce que le constituant D) contient de la silice en fines particules, présente en des proportions allant jusqu'à 10 et de préférence comprises entre 0,5 et 5% en poids.

5. Procédé selon une ou plusieurs des revendications 1 à 4, caractérisé en ce que le constituant D) contient comme pigments du noir de fumée présent en des proportions n'excédant pas 10, de préférence n'excédant pas 5, % en poids.

6. Procédé selon une ou plusieurs des revendications 1 à 5, caractérisé en ce qu'on produit une grosseur de particules d'au maximum 15, en particulier d'au maximum 5 µm.

7. Procédé selon une ou plusieurs des revendications 1 à 6, caractérisé en ce qu'il est mis en œuvre de façon continue.

8. Procédé selon une ou plusieurs des revendications 1 à 7, caractérisé en ce qu'il est mis en œuvre en au moins une étape en présence d'eau.

9. Procédé selon une ou plusieurs des revendications 1 à 8, caractérisé en ce qu'on ajuste à l'aide d'eau la peinture à un extrait sec de 5 à 80, notamment de 5 à 40, % en poids.

10. Utilisation des peintures ou vernis, que l'on obtient selon le procédé d'après une ou plusieurs des revendications 1 à 9, comme produit de revêtement pour l'enduction, en particulier de subjectiles métalliques, par mise en œuvre d'un procédé d'application sans courant ou du procédé de pulvérisation électrostatique.